# EUROPEAN PATENT APPLICATION

(11) **EP 4 734 503 A1**
(43) Date of publication of application: **29.04.2026**
(21) Application number: 24835223.9
(22) Date of filing: 18.06.2024
(51) Int. Cl.: H04N 13/117

(54) **METHOD FOR DISPLAYING VIRTUAL OBJECT, ELECTRONIC DEVICE, AND STORAGE MEDIUM**

(30) Priority: 06.07.2023 CN 202310827459
(71) Applicant: ZTE CORPORATION, Shenzhen, Guangdong 518057 (CN)
(72) Inventor: FAN, Mingming, Shenzhen, Guangdong 518057 (CN); LIANG, Zhen, Shenzhen, Guangdong 518057 (CN)
(74) Representative: Ziebig Hengelhaupt Intellectual Property Attorneys Patentanwaltskanzlei PartGmbB
(86) International application number: PCT/CN2024/099900
(87) International publication number: WO 2025/007740

(57) **Abstract**

The present application provides a method for displaying a virtual object, an electronic device, and a storage medium. The method includes: in response to that a display screen of a foldable device displays a virtual object, reading spatial information of the display screen; slicing the virtual object according to the spatial information of the display screen to obtain cross-sectional information of the virtual object; and displaying the cross-sectional information through one or more display screens of the foldable device.

## Description

### CROSS-REFERENCE TO RELATED APPLICATIONS

This application claims priority to Chinese Patent Application No. 202310827459.8, filed on July 6, 2023, the entire contents of which are incorporated herein by reference.

### TECHNICAL FIELD

The present application relates to the technical field of augmented reality, and in particular to a method for displaying a virtual object, an electronic device, and a storage medium.

### BACKGROUND

With the rapid development of augmented reality (AR) and foldable phone technologies, more and more users are seeking more realistic, immersive, and interactive three-dimensional (3D) virtual environments for a more engaging 3D interactive experience.

In the related art, users usually use handheld or head-mounted displays, or other wearable devices, to adjust their own angle or the angle of a virtual object for achieving 3D interaction. However, this method primarily aims to recreate the virtual object overall appearance in space, resulting in limited content and insufficient interactivity. This prevents users from gaining a more detailed understanding of the virtual object, affecting the user experience.

### SUMMARY

The present application provides a method for displaying a virtual object, an electronic device, and a storage medium.

In a first aspect, the present application provides a method for displaying a virtual object, which includes: in response to that a display screen of a foldable device displays a virtual object, reading spatial information of the display screen; slicing the virtual object according to the spatial information of the display screen to obtain cross-sectional information of the virtual object; and displaying the cross-sectional information through one or more display screens of the foldable device.

In a second aspect, the present application provides an electronic device, which includes processors and memories; a program for displaying the virtual object is stored in the memories, and the processors are configured to execute the program for displaying the virtual object, to implement the method for displaying the virtual object in the first aspect.

In a third aspect, the present application provides a storage medium; one or more programs are stored in the storage medium; the one or more programs are executable by one or more processors to implement the method for displaying the virtual object in the first aspect.

### BRIEF DESCRIPTION OF THE DRAWINGS

The accompanying drawings, which are incorporated in and forming part of this specification, illustrate embodiments consistent with the present application and are used to explain the principles of the present application together with the specification.

To more clearly illustrate technical solutions in the embodiments of the present application or the related art, the following will briefly introduce the drawings that need to be used in the description of the embodiments or the related art. Obviously, for those skilled in the art, without creative effort, other drawings can be obtained according to the structures shown in these drawings.

One or more embodiments are illustrated through the corresponding accompanying drawings. These descriptions do not constitute limitations on the embodiments. Elements with the same reference numbers in the drawings represent similar elements. Unless otherwise stated, the figures in the accompanying drawings are not to be limited by scale.
FIG. 1 is a flowchart of a method for displaying a virtual object according to an embodiment of the present application.
FIG. 2 is a schematic diagram showing the virtual object being sliced by a folded display screen according to an embodiment of the present application.
FIG. 3 is a flowchart of the method for displaying the virtual object according to another embodiment of the present application.
FIG. 4 is a schematic diagram showing establishing a rectangular coordinate system according to an embodiment of the present application.
FIG. 5 is a flowchart of the method for displaying the virtual object according to yet another embodiment of the present application.
FIG. 6 is a schematic diagram showing a wearable device slicing the virtual object according to an embodiment of the present application.
FIG. 7 is a block diagram of a device for displaying the virtual object according to an embodiment of the present application.
FIG. 8 is a schematic structural diagram of an electronic device according to an embodiment of the present application.

### DETAILED DESCRIPTION OF THE EMBODIMENTS

In order to make the purpose, technical solutions and advantages of the present application clearer, the technical solution in the embodiment of the present application will be clearly and completely described below in conjunction with the drawings of embodiments in the present application. Obviously, the described embodiments are only part of the embodiments of the present application, not all of the embodiments. Based on the embodiments in the present application, all other embodiments obtained by those skilled in the art without creative work shall fall within the scope of the present application.

The following description provides various embodiments or examples for implementing different structures of the present application. To simplify the description of the present application, the components and arrangements in specific embodiments are described below. These are merely examples and are not intended to limit the present application. Furthermore, reference numbers and/or letters may be repeated in different embodiments. Such repetition is for simplification and clarity and does not indicate a relationship between the various embodiments and/or arrangements discussed.

To address the technical problem that existing 3D interaction methods primarily aim to recreate the overall appearance of the virtual object in space and result in limited content and insufficient interactivity, the present application provides the method for displaying the virtual object, which can slice the virtual object and display the cross-sectional information of the virtual object, so that the internal structure of the virtual object can be shown and users can know the virtual object better, thereby enhancing interactivity and improving the user experience.

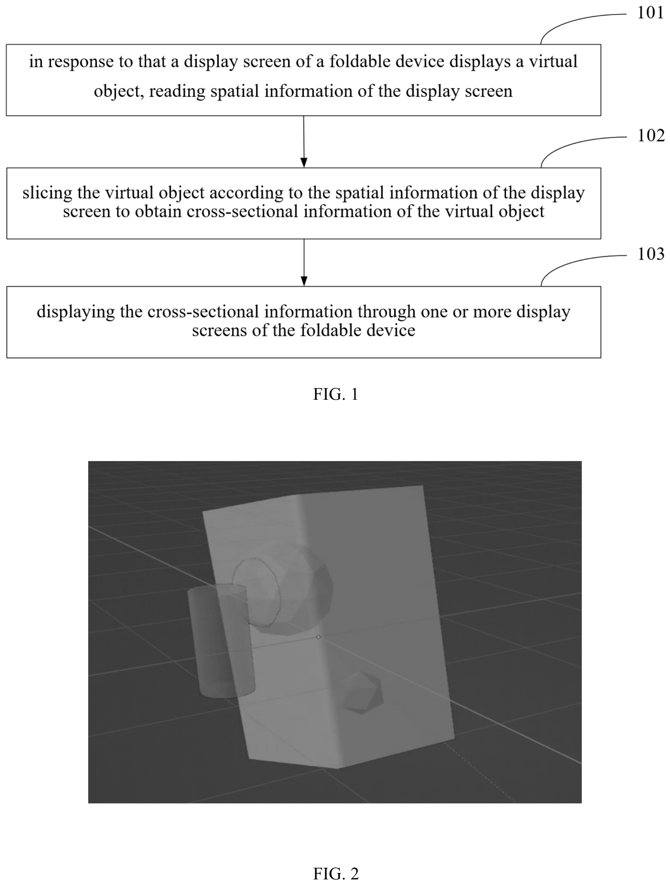

FIG. 1 is a flowchart of the method for displaying the virtual object according to an embodiment of the present application. As shown in FIG. 1, the process includes the following steps.

Step 101, in response to that a display screen of a foldable device displays a virtual object, reading spatial information of the display screen.

The aforementioned spatial information refers to the spatial parameters involved in the display screen. For example, when the display screen is folded, the spatial information can be the folded angle of the folded display screen, or can be the position information of the display screen relative to a reference coordinate system, or can be the relative position information between the display screen and a virtual object.

The aforementioned foldable device refers to a device whose display screen can be folded, such as a foldable phone or foldable tablet.

The aforementioned virtual object refers to a virtual object formed through augmented reality (AR) technology, which can include images, videos, text, 3D models, and the like.

In the present application, the implementing entity can be the aforementioned foldable device. This foldable device can install an AR application, and users can share the virtual object on the folded screen through the AR application on the foldable device, so that users can interact with the virtual object more intuitively.

In an embodiment, the foldable device can pre-store the virtual object. Based on this, when determining to display the virtual object, the virtual object can be displayed on the foldable screen of the foldable device through an installed AR application.

In another embodiment, the foldable device can be connected to a 3D scanning device, such as a 3D scanner. The foldable device can scan objects in the real world using the 3D scanning device, thereby generating a corresponding virtual object based on the scan results. Then, the virtual object can be displayed on the display screen of the foldable device through an installed AR application.

In the present application, the foldable device may include two display screens. The virtual object can be displayed on either one display screen or on two display screens, and the present application does not limit this.

In an embodiment, the foldable device can display the virtual object on two display screens.

In an embodiment, when the implementing entity of the present application determines that a virtual object is displayed on the display screen of a foldable device, the implementing entity can read the spatial information of the display screen.

In an embodiment, the spatial information of the display screen can be read by reding a file in the foldable device that is used to record display screen parameters.

In another embodiment, the spatial information of the display screen can be determined by using a third-party device.

In another embodiment, when the spatial information includes multiple spatial parameters, after determining one spatial parameter (such as, the folded angle of the folded display screen), other spatial parameters (such as, the cross-sectional model of the folded display screen) can be determined based on that spatial parameter.

Step 102, slicing the virtual object according to the spatial information of the display screen to obtain cross-sectional information of the virtual object.

The aforementioned cross-sectional information refers to information parameters related to the cross-section formed after the virtual object is sliced, which may include shape information, surface structure information, and the like.

In the present application, the displayed virtual object can be sliced based on the spatial information of the display screen of the foldable device to obtain the cross-section of the virtual object and the cross-sectional information. This allows the user to know the overall appearance of the virtual object, and know more detailed information about the internal structure.

In an embodiment, the foldable device may include two display screens. The user can fold the display screens, so that the plane where the folded display screen is located intersects with the virtual object to form the intersection surface. This intersection surface can be used as the cross-section surface of the virtual object, thereby enabling the slicing of the virtual object. For example, FIG. 2 is a schematic diagram showing the virtual object being sliced by a folded display screen according to an embodiment of the present application. As shown in FIG. 2, there is the intersection line between the folded display screen and the virtual object, namely, the black ring where the sphere intersects the bent portion of the screen. As the bending angle changes, the plane where the folded display screen is located will intersect with the virtual object at different positions.

In an embodiment, the user can fold one of the display screens, and slice the virtual object at different levels by folding the display screen at different angles. Each time of folding yields one cross-section of the virtual object.

In another embodiment, the user can fold two display screens of the foldable device to simultaneously slice the virtual object from different angles. Each time of folding yields two cross-sections of the virtual object.

To avoid incorrect slicing due to inaccurate folding angles when slicing a virtual object through using a folded display screen, and avoid repeated folding and reducing the screen service life, in the present application, after slicing a virtual object through using a folded display screen, a connected wearable device can be used in conjunction with the folded display screen to slice the virtual object again, reducing the frequency of folding and thus extending the service life of the display screen.

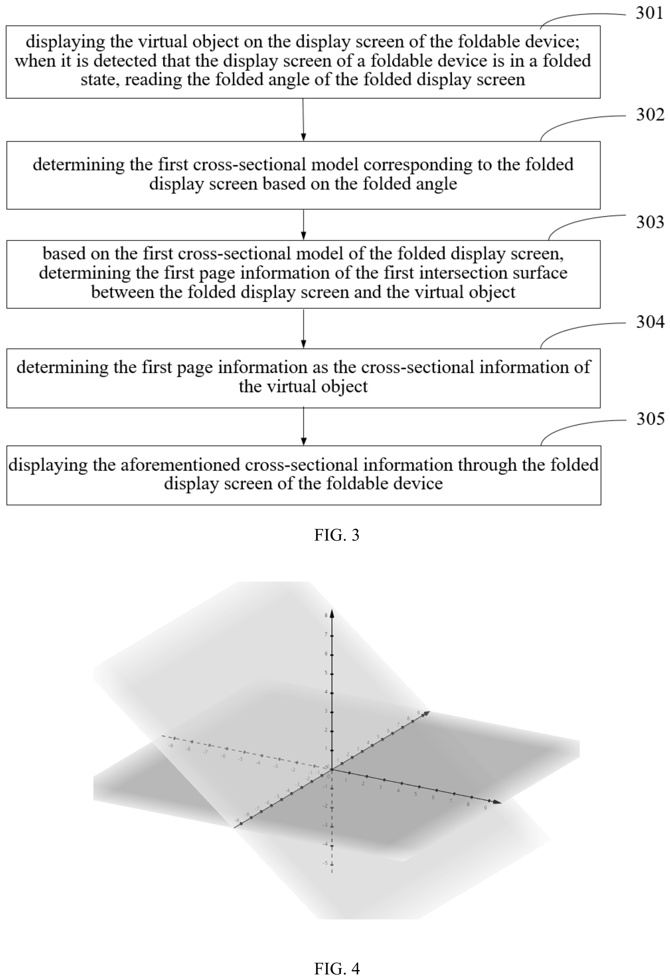

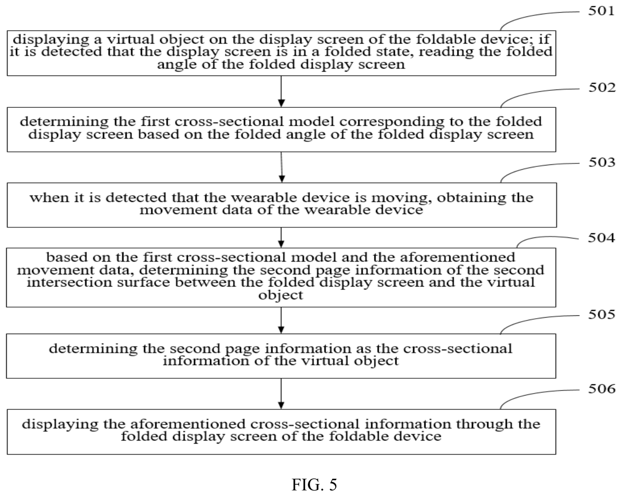

More specifically, how the virtual object is sliced based on the spatial information of the folded display screen, and how the cross-sectional information is determined, as well as how the wearable device and the folded display screen are used to slice the virtual object and determine the cross-sectional information, will be explained below based on the flowcharts shown in FIG. 3 and FIG. 5, respectively, which will not be repeated here.

Step 103, displaying the cross-sectional information through one or more display screens of the foldable device.

In the present application, after slicing the virtual object through the folded display screen and obtaining the cross-sectional information of the virtual object, the corresponding cross-sectional information can be displayed through one or more display screens of the foldable device, allowing users to understand the cross-sectional information of the virtual object more intuitively and in detail.

In an embodiment, if two display screens of the foldable device are folded and the virtual object is sliced through the two folded display screens, the cross-sectional information obtained by slicing can be displayed on each folded display screen.

In another embodiment, if one of the display screens of the foldable device is folded and the virtual object is sliced through the folded display screen, then the cross-sectional information of the virtual object can be displayed on the folded display screen.

In an embodiment, in order to achieve the effect of switching between different levels within a mobile phone screen, generate three-dimensional spatial application information, and increase the phone playability, display space, and display depth, the implementing entity of the present application can obtain application information corresponding to the foldable device and map the application information onto the aforementioned virtual object.

Based on this, when the implementing entity of the present application displays the cross-sectional information of the virtual object through one or more display screens of the foldable device, based on the application information mapped onto the virtual object, the cross-sectional information can be displayed through one or more display screens of the foldable device.

In the technical solution of the present application, when a virtual object is displayed on the display screen of a foldable device, the spatial information of the display screen is read, and the virtual object is sliced based on this spatial information of the display screen, to obtain cross-sectional information of the virtual object. Then the cross-sectional information is displayed on one or more display screens of the foldable device. This technical solution utilizes the folding feature of the foldable device, folding the display screen to slice the virtual object based on the spatial information of the display screen, thereby obtaining cross-sectional information of the virtual object. In this way, the virtual object can be sliced at different angles, the cross-sectional information can be displayed, thus revealing the internal structure of the virtual object. This enables users to understand the virtual object in more detail from different perspectives, increasing interactivity and improving the user experience.

Referring to FIG. 3, FIG. 3 is a flowchart of the method for displaying the virtual object according to another embodiment of the present application. Based on the flowchart in FIG. 1, FIG. 3 shows when it is detected that the display screen of a foldable device is in a folded state, the virtual object is sliced according to the spatial information of the display screen to obtain the cross-sectional information. As shown in FIG. 3, this process may include the following steps.

Step 301, displaying the virtual object on the display screen of the foldable device; when it is detected that the display screen of a foldable device is in a folded state, reading the folded angle of the folded display screen.

Step 302, determining the first cross-sectional model corresponding to the folded display screen based on the folded angle.

Steps 301 and 302 will be explained together below.

The aforementioned folded angle refers to the angle at which the folded display screen is folded on the foldable device.

The aforementioned first cross-sectional model refers to the model corresponding to the plane where the folded display screen is located, which can be a formula or a model expression, and the present application does not limit this.

In the present application, when a virtual object is detected on the display screen of the foldable device, and the display screen is in a folded state, the folded angle of the folded display screen can be determined as the spatial information.

Based on this, the implementing entity of the present application can read the folded angle of the folded display screen.

In an embodiment, the folded angle of the folded display screen can be determined by reading parameter information about the display screen from the foldable device.

In another embodiment, the folded angle of the folded display screen can be measured by a third-party device.

In the present application, after determining the folded angle of the folded display screen, in order to enable the plane where the folded display screen is located to slice the virtual object, a first cross-sectional model corresponding to the folded display screen can be determined based on the folded angle of the folded display screen.

In an embodiment, when one display screen of the foldable device is folded, a rectangular coordinate system can be established on the basis that the unfolded display screen is configured as a reference plane. Position information (hereinafter referred to as "first position information") corresponding to the folded display screen is determined based on the rectangular coordinate system and the folded angle. Here, the first position information refers to the position information of the folded display screen in the rectangular coordinate system, such as the coordinates of any point on the folded display screen in the rectangular coordinate system.

Next, based on the aforementioned first position information, the first cross-sectional model corresponding to the folded display screen can be determined.

In an embodiment, the midpoint of the folding line between the two display screens of the foldable phone is used as the original point, and the plane where the folded display screen is located is used as the reference plane, that is, the plane where the x-axis and y-axis are located in a rectangular coordinate system. For example, FIG. 4 is a schematic diagram showing establishing a rectangular coordinate system according to an embodiment of the present application. Next, the coordinates of any point on the plane where the folded display screen is located and the normal vector of that plane are determined. Using the principle that the line connecting any point to the original point is perpendicular to the normal vector, the formula of the plane is determined. This expression contains multiple unknowns.

Then, based on the aforementioned folding angle, the direction cosine of the normal vector direction can be determined. Based on this, the unknowns in the formula are determined, thereby obtaining the formula of the plane where the folded display screen is located.

For example, first, a vector perpendicular to the plane where the folded display screen is located is obtained, and this vector is the normal vector of that plane. Then the normal vector is configured be n = (A, B, C), where A, B, and C are not all zero.

Then, using the principle that the line connecting any point P(x, y, z) on the plane to the original point O (0, 0, 0) is perpendicular to the normal vector, the planar point-form formula, namely, Ax + By + Cz = 0, can be obtained.

Finally, based on the folded angle, the direction cosine of the normal vector is determined. Let the angle between the plane and the x-axis be α, that is, the folded angle of the folded display screen be α, then the following formula can be obtained: cosα=frac {A} {sqrt {A^ {2} + B^ {2} + C^ {2}}}. Similarly, Let the angle between the plane where the folded display screen is located and y-axis be β, and let the angle between the plane where the folded display screen is located and z-axis be γ , then the following formula can be obtained: cos β =frac {B} {sqrt {A^ {2}+B^ {2}+C^ {2}}} 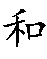 cos γ =frac {C} {sqrt {A^ {2}+B^ {2}+C^ {2}}}. From this, the values of A, B, and C can be determined. Substituting these values into the formula of Ax + By + Cz = 0 yields the formula of the plane.

Finally, calculations show that when the folded angle of the folded display screen is α, the formula of the cross-section surface where the folded display screen is located (that is, the first cross-sectional model) is: cos(α)x + sin(α)z = 0.

In another embodiment, when the two display screens of the foldable device are folded, a rectangular coordinate system (such as, the rectangular coordinate system shown in FIG. 4) is established on the basis that the planes where the two display screens is located before folding are configured as reference planes. Based on this rectangular coordinate system and the folded angle of each folded display screen, position information (hereinafter referred to as "fourth position information") is determined for each folded display screen. This fourth position information refers to the position of each folded display screen within the rectangular coordinate system, such as the coordinates of any point on each folded display screen within that system.

Subsequently, based on the aforementioned fourth position information, the first cross-sectional model corresponding to each folded display screen can be determined.

The process of how the first cross-sectional model corresponding to each folded display screen is determined, can refer to the process described above for determining the first cross-sectional model of the folded display screen when one display screen of the foldable device is folded.

Step 303, based on the first cross-sectional model of the folded display screen, determining the first page information of the first intersection surface between the folded display screen and the virtual object.

Step 304, determining the first page information as the cross-sectional information of the virtual object.

Steps 303 and 304 will be explained together below.

The first intersection surface mentioned above refers to the plane where the folded display screen intersects with the virtual object.

Accordingly, the aforementioned first page information refers to the page information corresponding to the first intersection surface, which may include, but is not limited to, the planar shape and planar structure information of the first intersection surface.

In the present application, the foldable device may include two display screens. The user can fold at least one of the two display screens, so that an intersection surface (hereinafter referred to as "first intersection surface") can be formed between the plane where the folded display screen is located with the virtual object. This first intersection surface is then used as a cross-section surface of the virtual object, thereby achieving slicing the virtual object. Subsequently, the page information (hereinafter referred to as "first page information") of the first intersection surface can be determined and the first page information is determined as the cross-sectional information of the virtual object.

In an embodiment, as described above, when determining the first cross-sectional model corresponding to the folded display screen, a rectangular coordinate system can be established, and the first cross-sectional model can be determined based on the position information of the folded display screen within the rectangular coordinate system.

Based on this, when determining the first page information of the first intersection surface between the folded display screen and the virtual object, the position information (hereinafter referred to as "second position information") of the virtual object within the rectangular coordinate system can be determined.

Subsequently, based on the second position information, a first spatial model corresponding to the virtual object can be established. The first spatial model refers to a model that approximately represents the virtual object, such as a triangular mesh model.

Based on this, the implementing entity in an embodiment of the present application can determine the first page information of the first intersection surface between the folded display screen and the virtual object according to the aforementioned first cross-sectional model and the first spatial model, and determine this first page information as the cross-sectional information of the virtual object.

In an embodiment, the first page information of the first intersection surface can be determined in the following method. First, based on the aforementioned first cross-sectional model and the first spatial model, an expression (hereinafter referred to as "first expression") of the first intersection surface between the folded display screen and the virtual object can be determined. This first expression can be used to represent the coordinates of the first intersection surface between the folded display screen and the virtual object in the established rectangular coordinate system.

Subsequently, based on the first expression mentioned above, multiple intersection points between the folded display screen and the virtual object can be determined. These intersection points can be the critical points of the first intersection surface between the folded display screen and the virtual object.

Based on this, the shape information (hereinafter referred to as "first shape information") of the first intersection surface between the folded display screen and the virtual object can be determined based on these multiple intersection points. In this case, the first shape information of the first intersection surface can be used to represent the shape of the first intersection surface. However, in this case, the entire plane is covered by the model surface of the first spatial model. For example, if the first spatial model corresponding to the virtual object is a triangular mesh model, then the first intersection surface will consist entirely of triangles.

Therefore, the implementing entity in an embodiment of the present application can remove the model surface corresponding to the first intersection surface in the first spatial model, thereby obtaining the planar structure information corresponding to the first intersection surface. Since the first intersection surface belongs to any plane of the virtual object, the planar structure information of the first intersection surface can represent the internal structure information of the virtual object.

Finally, the first shape information and the first planar structure information can be determined as the first page information of the first intersection surface.

For example, taking the first spatial model to be a triangular mesh model as an example, the surface of the virtual object is composed of n triangles, each triangle is determined by three vertices, namely, P_i, Q_i, R_i (i=1, 2, ..., n). The plane corresponding to the folded display screen is determined by the formula of ax + by + cz + d = 0, where (a, b, c) are the normal vectors of the plane and d is a constant.

In an embodiment, for each triangle, let ray L_i originate from any point on the plane and radiate along the direction of the plane normal vector, that is, L_i(t) = (x_0, y_0, z_0) + t(a, b, c), where t is a parameter, and (x_0, y_0, z_0) is any point on the plane, then it can be obtained by substituting into the plane formula.

Next, determining the intersection point S_i of ray L_i and triangles P_iQ_iR_i. If S_i exists, it can be calculated based on the following formula.

Let the side vectors of the triangle be u_i = Q_i - P_i, v_i = R_i - P_i, and the direction vector of the ray be w = (a, b, c), then there is S_i = P_i + s u_i + t v_i = L_i(r) = (x_0, y_0, z_0) + r w, where s, t, and r are unknowns.

Next, substituting the coordinates of S_i into the above formula yields a system of linear formulas: [u_i v_i -w] [s t r]^T = (x_0, y_0, z_0) - P_i, where [u_i v_i -w] is a 3x3 matrix and [s t r]^T is a 3x1 column vector.

Solving this system of linear formulas yields the values of s, t, and r. If this matrix is singular, that is, determinant is zero, it means the ray is parallel to or coplanar with the triangle, and there is no intersection point. If s, t, and r are all non-negative, and s + t <= 1, it means the intersection point S_i is inside the triangle; otherwise, the intersection point is outside the triangle or does not exist.

Finally, all intersection points S_i inside the triangle are collected; these points constitute the boundary points of the cross-section, and the boundary points are the intersection points of the folded display screen and the AR object. These points can be connected using algorithms to form one or more closed polygons, such as the convex hull algorithm or the alpha-shape algorithm.

Then, the first intersection surface can be represented by the following first expression. Let the cross-section consist of m polygons, each polygon consisting of k_j (j = 1, 2, ..., m) vertices arranged counter-clockwise as V_{j1}, V_{j2}, ..., V_{k_j} (j = 1, 2, ..., m). Then, the first shape information = {polygon_1, polygon_2, ..., polygon_m}, polygon_j = {V_{j1} , V_{j2}, ......, V_{jk_j}} (j = 1, 2, ......, m), V_{ji} = (x_{ji}, y_{ji}, z_{ji}) (i = 1 , 2, ......, k_j; j = 1, 2, ......, m).

Finally, based on the normal direction of the intersecting first cross-face, the triangular surface of the object model on one side of the screen can be removed, thereby displaying the object structure within the sliced cross-section, that is, the first planar structure information.

Step 305, displaying the aforementioned cross-sectional information through the folded display screen of the foldable device.

In the present application, to facilitate a more intuitive and clear understanding of the sliced cross-sectional information of the virtual object, the implementing entity of the present application can map the aforementioned page information onto the corresponding folded display screen for displaying. In other words, the cross-sectional information is obtained by the first display screen slicing the virtual object, and then the cross-sectional information is mapped onto the first display screen for displaying.

Furthermore, before displaying the cross-sectional information through one or more display screens of the foldable device, the implementing entity in an embodiment of the present application can obtain the application information of the foldable device and map the application information onto a virtual object.

Based on this, the implementing entity in an embodiment of the present application can display following information through one or more display screens of a foldable device, including but not limited to: internal structure information of a virtual object, page information of the virtual object being sliced, and application information of the foldable device. The aforementioned internal structure information includes first planar structure information, and the aforementioned page information includes first shape information.

In the technical solution of the present application, a virtual object is displayed on the display screen of a foldable device, and when it is detected that the display screen of the foldable device is in a folded state, the folded angle of the folded display screen is read. Then the first cross-sectional model corresponding to the folded display screen is determined based on the folded angle of the folded display screen. The first page information of the first intersection surface between the folded display screen and the virtual object is determined based on the first cross-sectional model of the folded display screen. The first page information is determined as the cross-sectional information of the virtual object, and the cross-sectional information is displayed through the folded display screen of the foldable device. This technical solution folds at least one display screen of a foldable device, thereby forming an intersection surface between the folded display screen and a virtual object. In this way, the virtual object can be sliced, and the shape and structural information of the intersection surface are displayed, which enables users to freely slice the virtual object and displays the internal structure, allowing users to understand the virtual object in more detail from different angles and improving the user experience.

As shown in FIG. 5, FIG. 5 is a flowchart of the method for displaying the virtual object according to yet another embodiment of the present application. The flowchart in FIG. 5, based on the flowchart in FIG. 3, describes how a wearable device is used to slice the virtual object. As shown in FIG. 5, this process may include the following steps.

Step 501, displaying a virtual object on the display screen of the foldable device; if it is detected that the display screen is in a folded state, reading the folded angle of the folded display screen.

Step 502, determining the first cross-sectional model corresponding to the folded display screen based on the folded angle of the folded display screen.

Detailed descriptions of steps 501 and 502 can be found in steps 301 and 302, and will not be repeated here.

Step 503, when it is detected that the wearable device is moving, obtaining the movement data of the wearable device.

The wearable device can be any wearable device connected to the foldable device, such as a watch, headphones, AR glasses, or AR helmet, and the like. The present application does not impose any limitations on this. The connection between the foldable device and the wearable device can be Bluetooth or electrical connection, which will not be limited in the present application.

The aforementioned movement data refers to the movement data of the wearable device relative to the foldable device, which may include, but is not limited to, movement distance and direction.

In the present application, when the foldable device detects the connected wearable device is moving, it can obtain the movement data of the wearable device.

In an embodiment, the foldable device can obtain the movement data of the wearable device in real time.

In an embodiment, the foldable device can obtain the movement data of the wearable device periodically.

In an embodiment, the foldable device can obtain the movement data of the wearable device after detecting that the wearable device has stopped moving.

Step 504, based on the first cross-sectional model and the aforementioned movement data, determining the second page information of the second intersection surface between the folded display screen and the virtual object.

Step 505, determining the second page information as the cross-sectional information of the virtual object.

Steps 504 and 505 are explained together below.

As shown in the flowchart in FIG. 3, the aforementioned first cross-sectional model can be the cross-sectional model corresponding to the plane where the folded display screen is located.

In the present application, since there may be errors when the folded display screen slices the virtual object, the user needs to continuously fold the display screen to achieve accurate slicing of the virtual object. However, frequent folding of the display screen will shorten the service life. Therefore, after folding at least one display screen, a virtual object can be moved through a wearable device to achieve precise slicing of the virtual object, thereby reducing the folding times of the display screen and extending the service life of the display screen on the foldable device.

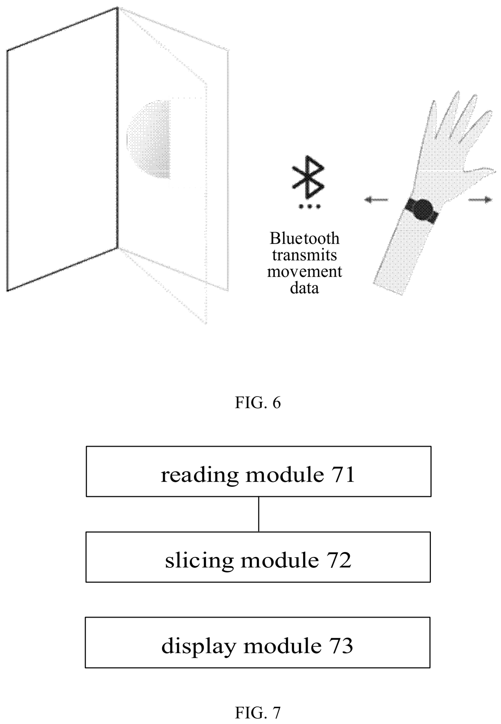

In an embodiment, after at least one display screen of the foldable device is folded, the angle between the two display screens is less than 180°. In this case, moving the virtual object changes the intersection position between the folded display screen and the AR object, forming a new intersection surface (hereinafter referred to as "second intersection surface"). For example, FIG. 6 is a schematic diagram showing a wearable device slicing the virtual object according to an embodiment of the present application. As shown in FIG. 6, taking a watch as an example of a wearable device, the watch is connected to a foldable device through Bluetooth. The user wears the watch and moves their arm wearing the watch, thus moving a virtual object. The virtual object is then sliced by a foldable display screen.

In an embodiment, when there is only one foldable display screen, the wearable device can form a new second intersection surface.

In another embodiment, when there are two foldable display screens, the wearable device can form two new second intersection surfaces.

Subsequently, the second page information of the second intersection surface can be determined, and this second page information is determined as the cross-sectional information of the virtual object.

In an embodiment, the second page information of the second intersection surface can be determined as follows.

First, based on the movement data, a second spatial model corresponding to the virtual object can be determined. The second spatial model refers to a model that approximately represents the virtual object, such as a triangular mesh model.

In an embodiment, when one display screen of the foldable device is folded, the implementing entity can establish a rectangular coordinate system based on the unfolded display screen and determine the position information (hereinafter referred to as "third position information") of the virtual object in this rectangular coordinate system before the virtual object moves. Then, based on the third position information and the movement data, the second spatial model corresponding to the virtual object can be established.

In an embodiment, the original point is the midpoint of the fold line between the two display screens of the foldable phone, and the plane where the unfolded display screen is located is used as the reference plane, that is, the plane where the x and y axes are located in the rectangular coordinate system.

In an embodiment, when the two display screens of the foldable device are folded, a rectangular coordinate system can be established on the basis that the plane where the two display screens before folding are located as the reference plane (such as, the rectangular coordinate system shown in FIG. 4). Then, the position information (hereinafter referred to as "third position information") of the virtual object before moving in the rectangular coordinate system is determined. After that, based on the third position information and the movement data, a second spatial model corresponding to the virtual object can be established.

In an embodiment, based on the third position information and movement data, the position information (hereinafter referred to as "fifth position information") of the virtual object in the rectangular coordinate system is determined after it is determined that the virtual object has moved. Then, based on the fifth position information, a second spatial model of the virtual object can be established.

For example, assuming the coordinate of a point in the AR object is (1, 0, 5), and the movement data is (5, 0, 5), then a new coordinate of that point is (6, 0, 5) after the position information is combined with the movement data.

The specific process of establishing the spatial model based on the position information of the virtual model in the rectangular coordinate system is the same as that in the related art, which will not be repeated here.

Then, based on the aforementioned first cross-sectional model and the second spatial model, the expression (hereinafter referred to as "second expression") for the second intersection surface between the folded display screen and the virtual object can be determined. This second expression represents the coordinates of the second intersection surface between the folded display screen and the virtual object in the established rectangular coordinate system.

Subsequently, based on the second expression, multiple intersection points between the folded display screen and the virtual object can be determined. These multiple intersection points can be configured as the critical points of the second intersection surface between the folded display screen and the virtual object.

Based on this, the shape information (hereinafter referred to as "second shape information") of the second intersection surface between the folded display screen and the virtual object can be determined according to multiple intersection points. This second shape information can be used to represent the shape of the second intersection surface. However, in this case, the entire plane is covered by the model surface of the second spatial model. For example, if the second spatial model corresponding to the virtual object is a triangular mesh model, then the second intersection surface will consist entirely of triangles.

In an embodiment, a preset algorithm can be used to connect the multiple intersection points to obtain the second shape information of the second intersection surface. This algorithm can be a convex hull algorithm or an alpha-shape algorithm.

Therefore, the implementing entity in an embodiment of the present application can remove the model surface corresponding to the second intersection surface in the aforementioned second spatial model, thereby obtaining the planar structure information corresponding to the second intersection surface. Since the second intersection surface belongs to any plane of the virtual object, the planar structure information of the second intersection surface can represent the internal structure information of the virtual object.

Finally, the aforementioned second shape information and the second planar structure information can be determined as the second page information of the second intersection surface.

Step 506, displaying the aforementioned cross-sectional information through the folded display screen of the foldable device.

In the present application, to enable users to have a more intuitive and clear understanding of the sliced cross-sectional information of the virtual object, the implementing entity of the present application can map the cross-sectional page information onto the corresponding folded display screen for displaying. That is, the cross-sectional information is obtained by using the first display screen to slice the virtual object, and then this cross-sectional information is mapped onto the first display screen for displaying.

Furthermore, before displaying the cross-sectional information on one or more display screens of the foldable device, the implementing entity in this embodiment can obtain the application information of the foldable device and map the application information onto the virtual object.

Based on this, the implementing entity in this embodiment can display information, through one or more display screens of a foldable device, including but not limited to: internal structure information of a virtual object, page information of the virtual object being sliced, and application information of the foldable device. The aforementioned internal structural information includes either first planar structure information or second planar structure information, and the aforementioned page information includes either first shape information or second shape information.

In the technical solution of the present application, a virtual object is displayed on the display screen of a foldable device, and when it is detected that the display screen of the foldable device is in a folded state, the folded angle of the folded display screen is read. Then the first cross-sectional model corresponding to the folded display screen is determined based on the folded angle of the folded display screen. When it is detected that the wearable device is moving, the movement data of the wearable device is obtained. The second page information of the second intersection surface between the folded display screen and the virtual object is determined based on the first cross-sectional model of the movement data. The second page information is determined as the cross-sectional information of the virtual object. In this technical solution, after a foldable display screen slices a virtual object, the virtual object can be precisely sliced through a wearable device connected to a foldable device and a folded display screen. In this way, the folding times of the display screen can be reduced, thereby extending the service life of the display screen of the foldable device.

FIG. 7 is a block diagram of the device for displaying the virtual object according to an embodiment of the present application. As shown in FIG. 7, the device may include a reading module 71, a slicing module 72, and a display module 73.

The reading module 71 is configured to read the spatial information of the display screen when the virtual object is displayed on the display screen of the foldable device.

The slicing module 72 is configured to slice the virtual object based on the spatial information of the display screen, to obtain the cross-sectional information of the virtual object.

The display module 73 is configured to display the cross-sectional information through one or more display screens of the foldable device.

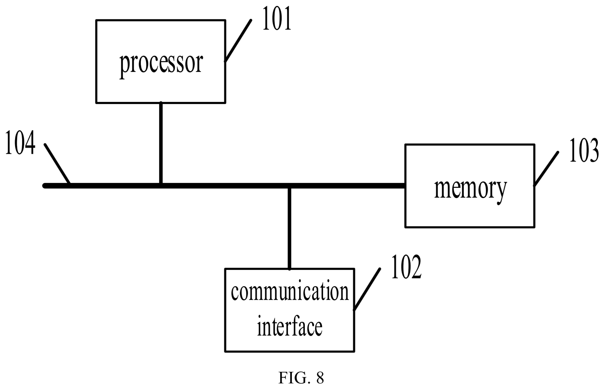

As shown in FIG. 8, FIG. 8 is a schematic structural diagram of an electronic device according to an embodiment of the present application. The electronic device includes a processor 101, a communication interface 102, a memory 103, and a communication bus 104. The processor 101, the communication interface 102, and the memory 103 communicate with each other through the communication bus 104. The memory 103 is used to store computer programs.

In an embodiment of the present application, when executing the program stored in the memory 103, the processor 101 implements the method for displaying the AR object in any one of the method embodiments mentioned above. The method includes: in response to that a display screen of a foldable device displays a virtual object, reading spatial information of the display screen;slicing the virtual object according to the spatial information of the display screen to obtain cross-sectional information of the virtual object;displaying the cross-sectional information through one or more display screens of the foldable device.

The present application further provides a computer-readable storage medium, which stores a computer program. When the program is executable by one or more processors steps of the method for displaying the virtual object in any one of the method embodiments mentioned above are implemented.

The device embodiments described above are merely illustrative. The units described as separate components may be used for physically separating or may not be used for physically separating. The components displayed as units may be physical units, or may not be physical units. That is, the components displayed as units may be located in one place or may be distributed across multiple network units. Some or all of the modules can be selected to achieve the purpose of embodiments according to actual needs.

Through the above description of the embodiments, those skilled in the art can clearly understand that each embodiment can be implemented using software plus a general-purpose hardware platform, or of course, using hardware. Based on this understanding, the above technical solutions, in essence or the part that contributes to the related technology, can be embodied in the form of a software product. This computer software product can be stored in a computer-readable storage medium, such as ROM/RAM, magnetic disk, optical disk, and the like, including several instructions to cause a computer device (which may be a personal computer, server, or network device, and the like) to execute the methods described in various embodiments or certain parts of the embodiments.

The terminology used herein is for the purpose of describing specific embodiments only and is not intended to limit the present application. Unless the context explicitly indicates otherwise, the singular forms "a", "an", and "described" as used herein may also include the plural forms. The terms "comprising," "including," "containing," and "having" are inclusive and therefore specify the presence of the stated features, steps, operations, elements, and/or components, but do not exclude the presence or addition of one or more other features, steps, operations, elements, components, and/or combinations thereof. The steps, processes, and operations described herein are not construed as requiring them to be performed in a specific order described or illustrated, unless explicitly stated otherwise. It should also be understood that additional or alternative steps may be used.

The above are only some embodiments of the present application, enabling those skilled in the art to understand or implement the present application. Various modifications to these embodiments will be readily apparent to those skilled in the art, and the general principles defined herein may be implemented in other embodiments without departing from the spirit or scope of the present application. Therefore, the present application is not to be limited to the embodiments shown herein, but is to be accorded the widest scope consistent with the principles and features claimed herein.

## Claims

1. A method for displaying a virtual object, **characterized by** comprising:
in response to that a display screen of a foldable device displays a virtual object, reading spatial information of the display screen;
slicing the virtual object according to the spatial information of the display screen to obtain cross-sectional information of the virtual object; and
displaying the cross-sectional information through one or more display screens of the foldable device.

2. The method according to claim 1, wherein:
in response to detecting that the display screen of the foldable device is in a folded state, the reading the spatial information of the display screen comprises: reading a folded angle of a folded display screen;
the slicing the virtual object according to the spatial information of the display screen to obtain the cross-sectional information of the virtual object comprises:
determining a first cross-sectional model corresponding to the folded display screen based on the folded angle of the folded display screen;
determining first page information of a first intersection surface between the folded display screen and the virtual object based on the first cross-sectional model of the folded display screen; and
determining the first page information as the cross-sectional information of the virtual object.

3. The method according to claim 2, wherein:
in response to that one display screen of the foldable device is folded, the determining the first cross-sectional model corresponding to the folded display screen based on the folded angle of the folded display screen comprises:
establishing a rectangular coordinate system based on an unfolded display screen;
determining first position information of the folded display screen based on the rectangular coordinate system and the folded angle; and
determining the first cross-sectional model corresponding to the folded display screen based on the first position information.

4. The method according to claim 3, wherein:
determining the first page information of the first intersection surface between the folded display screen and the virtual object based on the first cross-sectional model of the folded display screen:
determining second position information of the virtual object in the rectangular coordinate system;
establishing a first spatial model corresponding to the virtual object based on the second position information; and
determining the first page information of the first intersection surface between the folded display screen and the virtual object based on the first cross-sectional model and the first spatial model.

5. The method according to claim 4, wherein the determining the first page information of the first intersecting surface between the folded display screen and the virtual object based on the first cross-sectional model and the first spatial model comprises:
determining a first expression of the first intersecting surface between the folded display screen and the virtual object based on the first cross-sectional model and the first spatial model;
determining a plurality of intersection points between the folded display screen and the virtual object based on the first expression;
determining first shape information of the first intersecting surface between the folded display screen and the virtual object based on the plurality of intersection points;
removing a model surface corresponding to the first intersecting surface from the first spatial model to obtain first planar structure information of the virtual object corresponding to the first intersecting surface; and
determining the first shape information and the first planar structure information as the first page information of the first intersecting surface.

6. The method according to claim 2, wherein the foldable device is connected to a wearable device, and the slicing the virtual object according to the spatial information of the display screen to obtain the cross-sectional information of the virtual object comprises:
obtaining movement data of the wearable device in response to detecting the wearable device is moving;
determining second page information of a second intersection surface between the folded display screen and the virtual object based on the first cross-sectional model and the movement data; and
determining the second page information as the cross-sectional information of the virtual object.

7. The method according to claim 6, wherein the determining second page information of the second intersection surface between the folded display screen and the virtual object based on the first cross-sectional model and the movement data comprises:
determining a second spatial model corresponding to the virtual object based on the movement data;
determining a second expression of the second intersection surface between the folded display screen and the virtual object based on the first cross-sectional model and the second spatial model;
determining a plurality of intersection points between the folded display screen and the virtual object based on the second expression;
determining second shape information of the second intersection surface between the folded display screen and the virtual object based on the plurality of intersection points;
removing a model surface corresponding to the second intersection surface from the second spatial model to obtain second planar structure information of the virtual object corresponding to the second intersection surface; and
determining the second shape information and the second planar structure information as the second page information of the second intersection surface.

8. The method according to claim 7, wherein in response to that one display screen of the foldable device is folded, the determining the second spatial model corresponding to the virtual object based on the movement data comprises
establishing a rectangular coordinate system based on an unfolded display screen; determining third position information of the virtual object in the rectangular coordinate system before the virtual object moves; and
establishing the second spatial model corresponding to the virtual object based on the third position information and the movement data.

9. The method according to claim 5 or 7, wherein:
before displaying the cross-sectional information through the one or more display screens of the foldable device, the method further comprises:
obtaining application information corresponding to the foldable device; and
mapping the application information onto the virtual object,
the displaying the cross-sectional information through the one or more display screens of the foldable device comprises:
displaying one or more of the following through the folded display screen of the foldable device: an internal structure of the virtual object, page information of the virtual object being sliced, and application information of the foldable device, and
wherein the internal structure comprises the first planar structure information or the second planar structure information, and the page information comprises the first shape information or the second shape information.

10. An electronic device, **characterized by** comprising:
one or more memories; and
one or more processors, wherein a program for displaying the virtual object is stored in the one or more memories, and the one or more processors are configured to execute the program for displaying the virtual object, to implement the method for displaying the virtual object according to any one of claims 1 to 9.

11. A storage medium, **characterized in that** one or more programs are stored in the storage medium, wherein the one or more programs are executable by one or more processors to implement the method for displaying the virtual object according to any one of claims 1 to 9.
